# FASCICULE DE BREVET EUROPEEN

(11) **EP 2 129 505 B1**
(45) Date de publication et mention de la délivrance du brevet: **15.07.2020**
(21) Numéro de dépôt: 08709909.9
(22) Date de dépôt: 29.01.2008
(51) Int. Cl.: B29L 31/56, B29K 23/00, B29K 25/00, B29K 27/00, B29C 48/06, B29K 67/00, B29C 43/20, B29B 11/12

(54) **METHODE DE REALISATION D'UN OBJET MULTICOUCHE ET OBJET AINSI OBTENU**
VERFAHREN ZUR HERSTELLUNG EINES MEHRSCHICHTIGEN OBJEKTS UND HERGESTELLTE OBJEKTE
METHOD OF MANUFACTURING A MULTI-LAYERED OBJECT AND CORRESPONDING MULTI-LAYERED OBJECT

(30) Priorité: 07.02.2007 EP 07101888
(43) Date de publication de la demande: 09.12.2009
(73) Titulaire: Aisapack Holding SA, 1896 Vouvry (CH)
(72) Inventeur: THOMASSET, Jacques, 1896 Vouvry (CH)
(74) Mandataire: Grosfillier, Philippe
(86) Numéro de dépôt international: PCT/IB2008/050313
(87) Numéro de publication internationale: WO 2008/096290

(56) Documents cités:
- EP-A- 0 926 078
- WO-A-2005/084902
- US-A- 4 649 013
- DATABASE WPI Week 199231 Thomson Scientific, London, GB; AN 1992-253408 XP002444142 & JP 04 169207 A (KURATA KK) 17 juin 1992 (1992-06-17) cité dans la demande
- DATABASE WPI Week 199148 Thomson Scientific, London, GB; AN 1991-349948 XP002490682 & JP 03 234604 A (KUWAHARA Y) 18 octobre 1991 (1991-10-18)
- DATABASE WPI Week 200575 Thomson Scientific, London, GB; AN 2005-734002 XP002490688 & WO 2005/092603 A (TOYO SEIKAN KAISHA LTD) 6 octobre 2005 (2005-10-06)

## Description

### Domaine de l'invention

La présente invention concerne une méthode de réalisation d'objets multicouche par compression moulage d'une dose multicouche constituée d'une résine fondue.

### Etat de la technique

Le document brevet JP4169207 décrit un procédé de réalisation d'un objet multicouche par compression dans un moule d'une dose dont les couches sont disposées perpendiculairement à l'axe de compression. La figure 1 illustre le procédé décrit dans le brevet Japonais. Selon ce procédé, une dose 1 en forme de galette et formée d'un empilement de plusieurs films est disposée dans une moule 5. Un film 2 positionné au centre de la structure multicouche présente une perméabilité réduite. L'invention décrite dans le document brevet JP4169207 consiste à former un objet multicouche par compression de la dose 1 dans le moule 5 et à emprisonner à l'intérieur de l'objet les extrémités de 10 de la couche 2. Afin d'emprisonner les extrémités du film 2, le document brevet JP4169207 propose de comprimer la dose à une température supérieure à la température de fusion des films 3 et 4 et inférieure à la température de fusion du film 2. Le document brevet JP4169207 décrit à titre d'exemple une dose formée des films 3 et 4 en Polyéthylène et du film 2 en polyamide. Le procédé décrit dans le document brevet JP4169207 comporte plusieurs inconvénients. Selon le document brevet JP4169207 la couche intermédiaire 2 se trouve à l'état solide lors du moulage puisque la température de moulage est inférieure à la température de fusion dudit film. Par conséquent, le film 2 subit peu ou pas de déformation lors du moulage. Le procédé décrit dans le document brevet JP4169207 permet difficilement la propagation de la couche fonctionnelle 2 jusqu'à l'extrémité de l'objet. Ce procédé nécessite également la réalisation, le chauffage et le transfert dans la cavité 8 du moule 5 d'une dose plate de fine épaisseur. Les opérations de réalisation et manipulation de la dose sont insuffisamment décrites dans le brevet Japonais et ce procédé parait difficilement utilisable pour la fabrication d'objet à grande cadence de production.

Le brevet US4904512 illustré figure 2 décrit un objet multicouche réalisé par compression moulage d'une dose multicouche. Ce brevet propose l'utilisation d'une dose cylindrique 1 comportant une couche fonctionnelle 2 complètement emprisonnée entre les couches de résine 3 et 4. L'emprisonnement des extrémités 10 de la couche 2 à l'intérieur de la dose est réalisé grâce à une méthode d'extrusion permettant une alimentation discontinue de la couche fonctionnelle. Cependant, la compression de la dose 1 dans le moule 8 n'est pas décrite dans le brevet US4904512. Par exemple les dimensions de la dose et son positionnement dans la cavité 8 du moule 5 ne sont pas indiqués. L'exposé de l'invention demeure silencieux sur la manière dont la dose est comprimée. Cependant, au vu des objets décrits dans ce brevet et étant donné que l'on cherche à obtenir un écoulement symétrique des matériaux comprimés, il en résulte que la compression doit nécessairement être réalisée selon une direction parallèle à l'axe d'extrusion.

La solution décrite dans le brevet US4904512 comporte néanmoins plusieurs difficultés. Comme décrit dans le brevet US4904512, un dispositif de co-extrusion avec un mécanisme de valve à obturation pour la résine fonctionnelle contrôle l'écoulement intermittent de ladite résine fonctionnelle. Cependant, ces mécanismes de valve à obturation sont compliqués et onéreux ; et ils ne permettent pas de contrôler l'écoulement intermittent de façon assez précise à grande cadence de production. Un deuxième inconvénient réside dans la difficulté de réaliser des doses comportant plus de deux résines. Généralement la couche fonctionnelle n'adhère pas naturellement sur la résine formant l'objet. Cet inconvénient peut conduire à une mauvaise adhésion entre les couches et à des objets défectueux.

Enfin, un troisième inconvénient réside dans la difficulté à optimiser l'automatisation de la fabrication successive d'un grand nombre d'objets.

En effet, une fois la dose réalisée, celle-ci ne peut être comprimée immédiatement dès la sortie de l'extrudeuse. Au minimum un déplacement conséquent ou une rotation de 90° de la dose est nécessaire, ce qui implique un appareillage plus complexe et un ralentissement de la fréquence de production des objets.

La réalisation d'objets multicouches en résine thermoplastique par compression moulage à grande vitesse de production est avantageusement réalisée par l'extrusion d'une dose multicouche qui est transférée dans la cavité d'un moule puis comprimée à l'état fondu afin de former l'objet. Ce procédé décrit dans l'art antérieur consiste à fabriquer des objets tels que des bouchons ou des gobelets en comprimant la dose positionnée au centre de l'outillage et suivant son axe de symétrie. Cette configuration permet d'obtenir un écoulement axisymétrique lors de la compression et in fine une répartition axisymétrique de la couche fonctionnelle dans l'objet.

Cependant, lorsque l'on comprime la dose selon l'axe d'extrusion, on rencontre au moins deux difficultés majeures, à savoir la discontinuité de la couche fonctionnelle au centre de l'objet et une trop grande quantité de matière fonctionnelle dans l'objet.

La première difficulté est rencontrée quand la dose contient une faible quantité de matière fonctionnelle afin de permettre une réalisation économique d'objets multicouches. La matière fonctionnelle forme alors dans la dose une fine couche parallèle à l'axe d'extrusion. La résine fonctionnelle est absente de la partie centrale de la dose et par conséquent de la partie centrale de l'objet.

La deuxième difficulté est rencontrée en positionnant la matière fonctionnelle au centre de la dose comme il est proposé dans le brevet US4904512. Cependant, afin de répartir la couche fonctionnelle jusqu'à la périphérie de l'objet, il est nécessaire d'augmenter considérablement la quantité de résine fonctionnelle dans la dose afin que la résine fonctionnelle forme un cylindre de rayon suffisamment grand.

Si la compression selon une direction se confondant avec l'axe de symétrie de la dose donne satisfaction en ce qui concerne l'objet formé lorsque les couches sont disposées perpendiculairement à la direction de compression, il n'est en revanche pas possible d'obtenir une production à grande vitesse, notamment parce que l'extrusion de cette dose n'est pas possible

Il existe donc un besoin de pouvoir remédier aux problèmes précités. Ce besoin se fait particulièrement ressentir pour des doses qui présentent un axe de symétrie qui se confond avec la direction d'extrusion.

### Objet de l'invention

La présente invention permet de réaliser des objets multicouches par compression moulage en remédiant aux problèmes précités. L'invention consiste à comprimer une dose selon une direction qui coupe la direction d'extrusion pour réaliser des objets multicouches à grande cadence de production.

### Résumé de l'invention

L'invention consiste en un procédé de fabrication d'un objet multicouche en résine synthétique par compression moulage d'une dose de résine fondue multicouche comportant au moins une couche fonctionnelle, chaque couche de la dose se trouvant à l'état fondu lors de la compression; procédé consistant à co-extruder des résines au travers d'une filière, à couper l'extrudat périodiquement afin d'obtenir une dose, puis à déposer la dose à l'état fondu dans la cavité d'un moule ; procédé définissant de la sorte dans la dose une direction d'extrusion et une disposition de la couche fonctionnelle parallèle à la direction d'extrusion ; procédé caractérisé par le fait que l'on comprime la dose selon un axe de compression qui coupe la direction d'extrusion, de manière à induire dans l'écoulement des couches une asymétrie par rapport à l'axe de compression.

L'invention consiste également en un objet multicouche réalisé par compression moulage et dont la répartition des couches est asymétrique.

L'invention permet de réaliser un objet de géométrie asymétrique ayant une distribution asymétrique des couches. Un objet multicouche, tel qu'un bouchon ou une capsule, ayant une couche fonctionnelle couvrant sensiblement toute la surface de l'objet peut être obtenu.

L'invention permet également de réaliser un objet de géométrie asymétrique, comme un bouchon de géométrie ovale.

On notera enfin que pour la plupart des objets selon l'invention, certaines portions de ceux-ci ont un nombre de couches supérieur au nombre de couches initialement présentes dans la dose.

Par rapport à l'enseignement de l'art antérieur, l'originalité du procédé selon l'invention réside dans la réalisation par extrusion d'une dose multicouche conjointement à sa compression selon une direction qui traverse les couches. Comme il l'a été exposé précédemment, la réalisation conjointe de ces deux opérations conduit à comprimer une dose selon un axe qui ne constitue pas un axe de symétrie de ladite dose. Les écoulements multicouches résultants ne sont pas décrits dans l'art antérieur, et les objets multicouches non plus. Les documents brevets JP4169207 et US4904512 ne décrivent pas des doses non symétriques par rapport à l'axe de compression ; ni des écoulements sans axe de symétrie, ni des objets axisymétriques dont la structure multicouche n'a pas d'axe de symétrie.

Le procédé selon l'invention proposé va à l'encontre du bon sens de l'homme du métier qui consiste à comprimer une dose symétrique par rapport à l'axe de compression afin d'obtenir un écoulement uniforme dans toute les directions, et in fine obtenir un objet dont l'axe de symétrie est aussi l'axe de symétrie de sa structure multicouche.

### Description détaillée de l'invention

Dans l'exposé de l'invention les termes suivants sont utilisés :
- Longueur, largeur et hauteur de la dose : la dose est définie par sa hauteur dans la direction de compression, sa longueur dans la direction d'extrusion, et sa largeur. La hauteur et la largeur de la dose dépendent de l'outillage d'extrusion ; la longueur de la dose dépend de la coupe du jonc extrudé. Lorsque la dose est cylindrique la hauteur et la largeur sont identiques.
- axe vertical : axe de compression 16.
- Couche fonctionnelle : la couche fonctionnelle est de faible épaisseur et apporte des propriétés spécifiques à l'objet. La couche fonctionnelle peut être une couche barrière par exemple.

L'invention sera mieux comprise ci-après au moyen d'une description détaillée des exemples illustrés par les figures suivantes.

### Brève description des figures

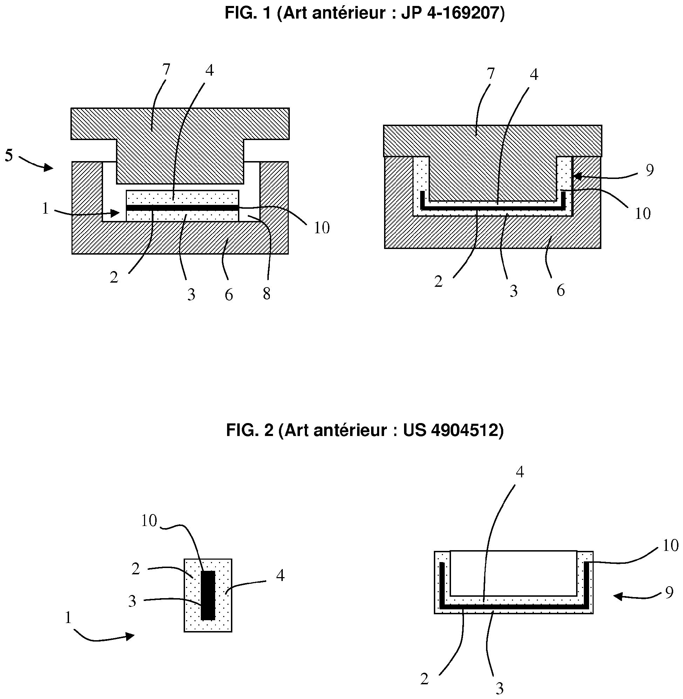

Les figures 1 et 2 décrivent des solutions proposées dans l'art antérieur pour réaliser un objet par compression dans un moule d'une dose.
Les figures 3 à 6 montrent la compression dans un moule 5 d'une dose co-extrudée 1 dont les couches fonctionnelles 2 sont perpendiculaires au plan de compression et émergentes en surface de la dose. L'objet 9 obtenu se caractérise par les plis 11 des couches 2.
La figure 7 illustre le fait que la couche fonctionnelle 2 peut être elle-même formée de plusieurs couches.
La figure 8 est un exemple de dose extrudée selon l'axe 15 et qui ne présente pas de symétrie vis-à-vis de l'axe de compression 16
La figure 9 illustre l'objet multicouche obtenu après compression selon l'axe 16 de la dose 1 illustrée figure 8. Cet objet 9 présente une structure multicouche asymétrique, avec cependant une répartition de la couche fonctionnelle 2 dans tout l'objet.
La figure 10 montre une dose multicouche cylindrique 1 extrudée selon l'axe 15. La dose 1 comprend une couche fonctionnelle 2 emprisonnée dans la dose sauf au niveau de ses extrémités 10.
La figure 11 illustre l'objet multicouche obtenu après compression selon l'axe 16 de la dose 1 illustrée figure 10. Cet objet 9 présente une structure multicouche asymétrique, avec cependant une propagation homogène de la couche fonctionnelle 2 dans l'objet.
Les figures 12 à 15 illustrent le procédé de fabrication d'objet multicouche.

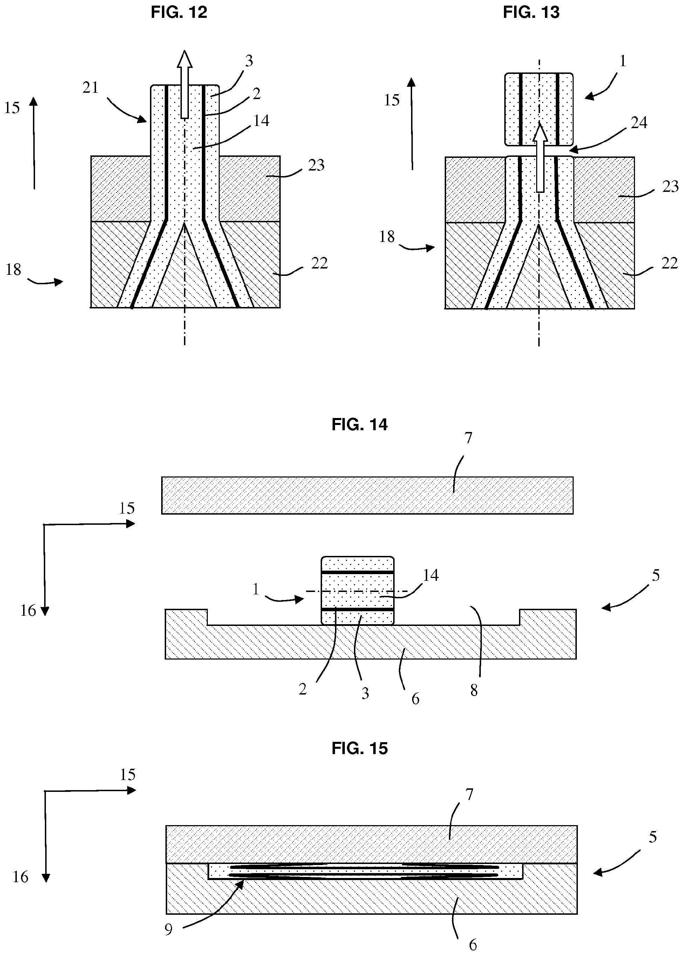

La figure 12 représente schématiquement l'extrusion d'un jonc multicouche 21.
La figure 13 montre la coupe du jonc pour former une dose multicouche 1.
La figure 14 illustre le positionnement de la dose 1 dans la cavité 8 du moule 5.
La figure 15 montre la fabrication de l'objet 9 et la répartition des couches dans l'objet.

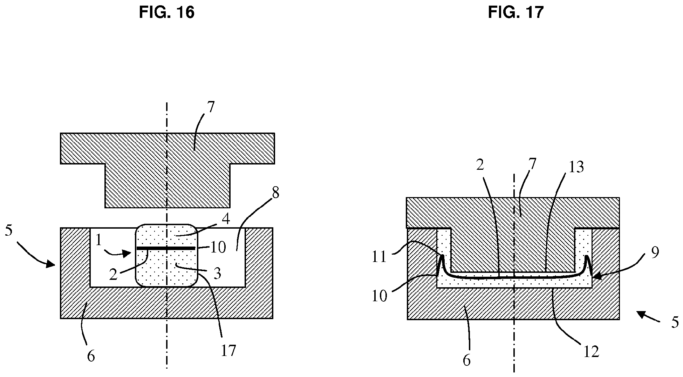

Les figures 16 et 17 montrent l'influence de la géométrie de l'objet sur la position des extrémités 10 de la couche fonctionnelle 2 dans l'objet 9.

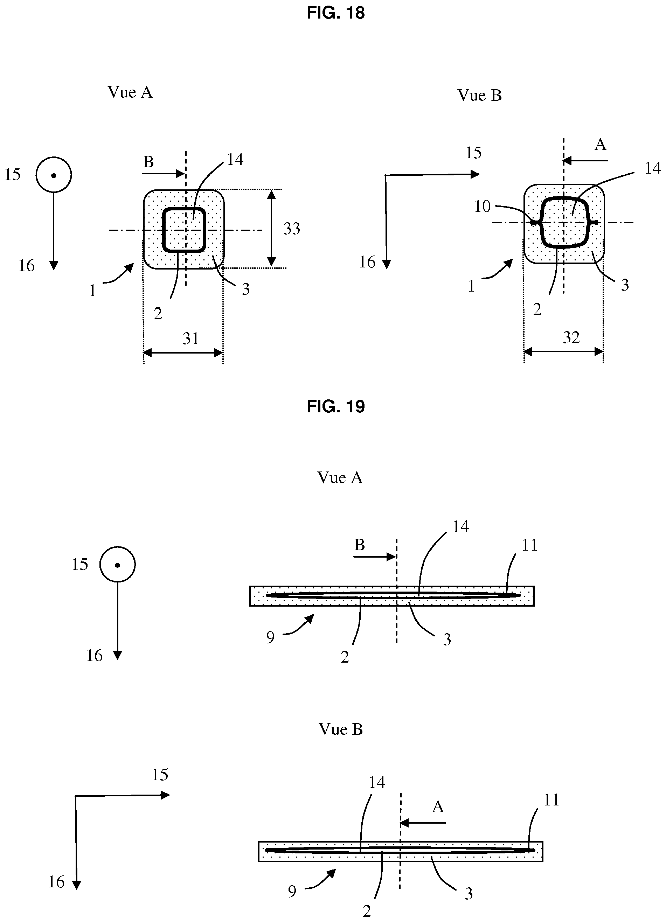

Les figures 18 et 19 illustrent un exemple où les extrémités 10 de la couche 2 sont emprisonnées dans la dose 1 et dans l'objet 9.

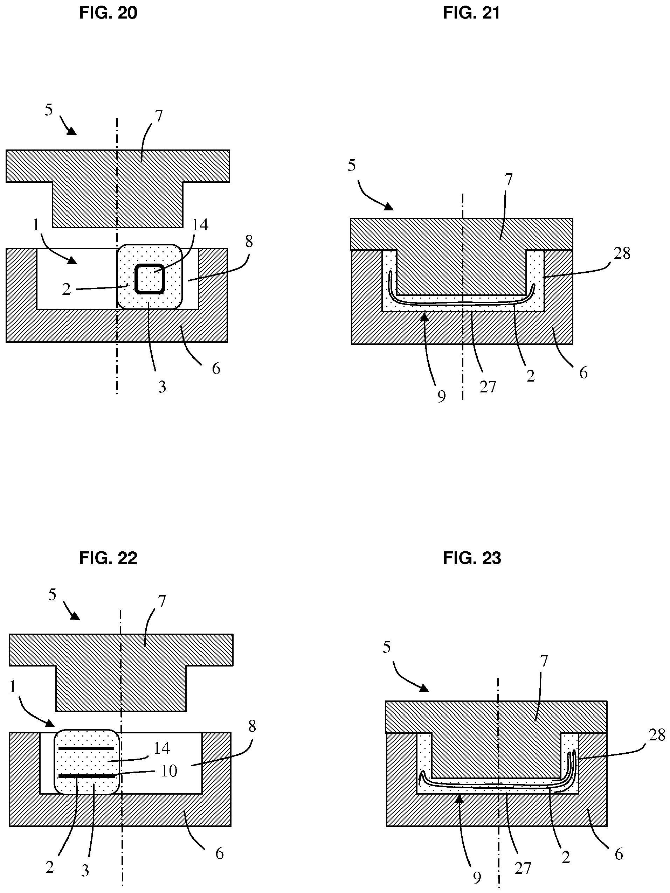

Les figures 20 à 23 montrent l'influence d'un positionnement décentrée de la dose 1 dans la cavité 8 du moule 5.

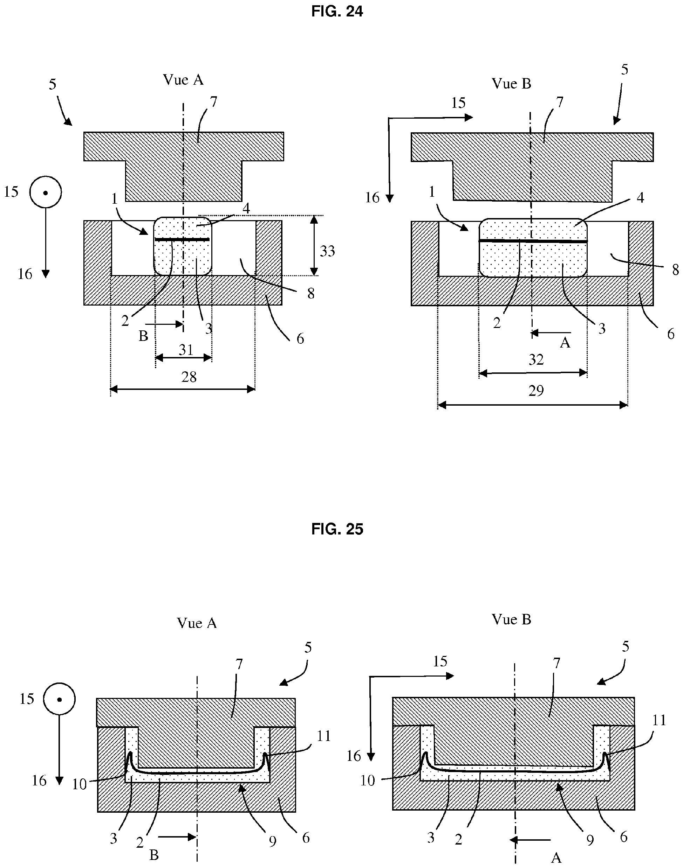

Les figures 24 et 25 montrent la réalisation d'objets qui ne présentent pas d'axe de symétrie.

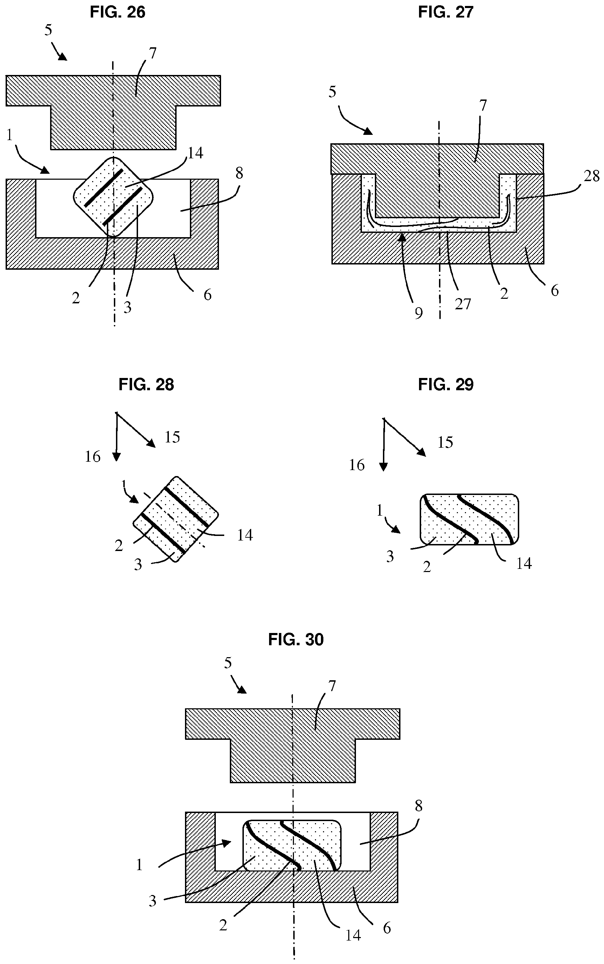

Les figures 26 et 27 illustrent la compression de la dose selon une direction qui est oblique par rapport à l'axe d'extrusion 15.
La figure 26 montre le positionnement de la dose dans le moule.
La figure 27 montre l'objet obtenu après compression.
Les figures 28 à 30 illustrent un procédé consistant à déformer la dose avant son positionnement dans le moule.
La figure 28 la dose extrudée selon l'axe 15.
La figure 29 montre la déformation de la dose selon l'axe de compression 16.
La figure 30 montre le positionnement de la dose pré-déformée dans la cavité du moule.

### Description détaillée des figures

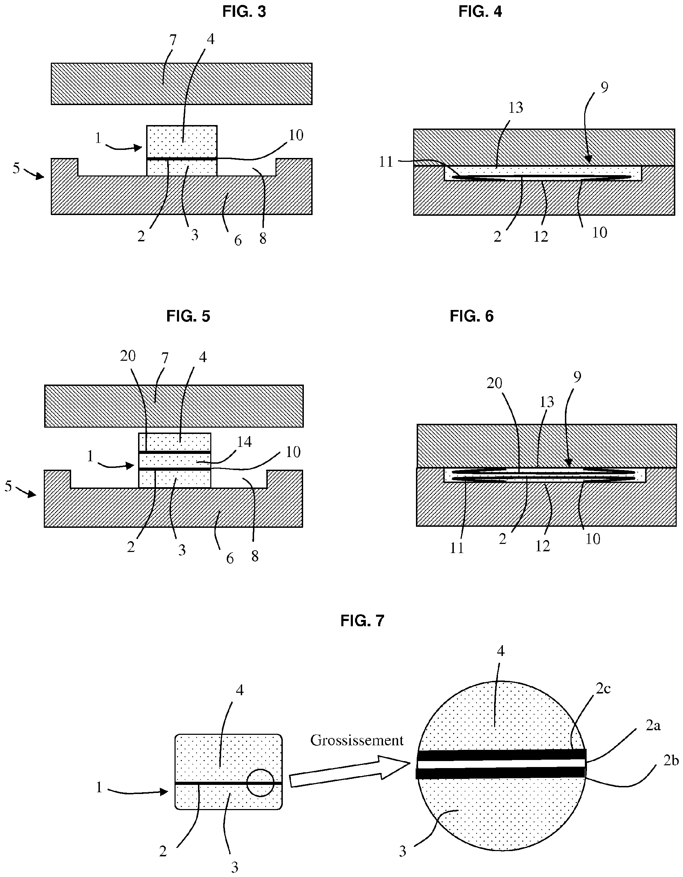

La figure 3 représente une vue en coupe d'une dose co-extrudée 1 comportant une couche fonctionnelle 2 emprisonnée entre deux couches 3 et 4 de résine. Les extrémités 10 de la couche 2 apparaissent en surface de la dose sinon se situent à proximité de ladite surface. La couche fonctionnelle 2 n'est pas située à la moitié de la hauteur de la dose ; ladite hauteur de dose étant considérée selon l'axe de compression. L'axe d'extrusion est disposé dans un plan horizontal. La dose 1 est comprimée dans la cavité 8 d'un moule 5 comprenant au moins une matrice 6 et un poinçon 7 dont le mouvement relatif assure la fermeture du moule et comprime la dose 1. La direction de compression de la dose 1 est perpendiculaire aux couches formant la dose 1.

La figure 4 représente une vue en coupe de l'objet 9 résultant de la compression de la dose 1 illustrée figure 3. Contrairement à l'enseignement de l'art antérieur, il est observé un empilement différent des couches dans l'objet 9 et dans la dose 1. Contre toute attente, il est trouvé que la couche fonctionnelle 2 forme un pli 11 et que les extrémités 10 de la couche 2 apparaissent en surface 12 de l'objet, voire à proximité de ladite surface. L'objet 9 ainsi formé comporte au moins localement un nombre de couche supérieur au nombre initial de couche dans la dose. Il est observé également que la position de la couche dans la dose prédétermine la surface de l'objet sur laquelle se trouvent les extrémités 10 de ladite couche 2. Si la couche 2 se situe dans la partie inférieure de la dose 1, alors les extrémités 10 de la couche 2 apparaissent au niveau de la surface inférieure 12 de l'objet. La figure 4 montre également que la couche 2 s'est propagée jusqu'à l'extrémité de l'objet 9, le pli 11 de la couche 2 étant la partie la plus éloignée radialement. Il a été trouvé que la distance de propagation radiale du pli 11 de la couche 2 dépend de la position de la couche 2 dans la dose et des dimensions respectives de la dose et de l'objet. A géométries de dose et d'objet constantes, plus la couche 2 est proche de la surface inférieure de la dose, plus la propagation radiale du pli 11 est faible.

L'analyse théorique de l'écoulement au cours du procédé de compression aide à comprendre la formation du pli 11 dans l'objet 9. Au début du procédé de compression, l'extrémité 10 de la couche 2 est localisée à proximité du front de propagation de l'écoulement qui est le lieu d'un écoulement particulier appelé « effet fontaine ». Chaque point du front de propagation se déplace du centre de l'écoulement vers la paroi. Ce phénomène est similaire à celui que l'on observe avec un jet d'eau vertical ; à l'extrémité du jet d'eau les particules d'eau se déplaçant du centre du jet vers la périphérie. Dans le cas présent, à un instant précis de la compression de la dose, l'extrémité 10 s'écoule au niveau du front de matière et par conséquent l'extrémité 10 est entraînée par l'écoulement fontaine vers la paroi inférieure du moule. A partir de cet instant, la compression de la dose se poursuit et le pli 11 se forme progressivement à cause du mécanisme suivant. Chaque point de l'écoulement (qui n'est pas située au niveau du front de propagation) se déplace à une vitesse différente de celle du point qui lui est adjacent. En effet, la vitesse de l'écoulement est plus faible à proximité de la paroi que dans la partie centrale de l'écoulement. Ce phénomène est similaire à celui de l'écoulement d'une rivière, la vitesse d'écoulement de l'eau étant plus faible (voire nulle) au bord de la rivière et maximale au centre de la rivière. Dans le cas présent, l'extrémité 10 se déplace donc à une vitesse plus faible que celle de la matière qui se trouve au-dessus d'elle. Cette différence de vitesse a pour effet de créer le pli 11 de la couche 2 . A noter également que l'extrémité du pli 11 est entraînée dans l'écoulement à une vitesse supérieure à celle de l'extrémité 10 de la couche 2.

Les figures 5 et 6 montrent un deuxième exemple de compression d'une dose dont les couches sont disposées perpendiculairement à l'axe de compression.

La figure 5 illustre une dose 1 comportant deux couches fonctionnelles 2 et 20 emprisonnées entre les couches 3, 4 et 14 de résine. Les couches 3 et 4 forment respectivement les surfaces inférieure et supérieure de ladite dose ; et la couche 14 formant la couche centrale se situe entre les couches 2 et 20. Les extrémités 10 des couches 2 et 20 apparaissent au niveau de la surface latérale de la dose 1 sinon se situent à proximité de ladite surface. Comme l'indique la figure 5, La couche de résine fonctionnelle 2 se situe dans la partie inférieure de la dose, tandis que la couche fonctionnelle 20 se situe dans la partie supérieure. La dose 1 est positionnée dans la cavité 8 d'un moule 5 formé d'une matrice 6 et d'un poinçon 7 dont le mouvement relatif comprime la dose et ferme la cavité dudit moule 5. La direction de compression est perpendiculairement aux couches formant la dose.

La figure 6 représente l'objet 9 résultant de la compression dans le moule 5 de la dose 1 illustrée figure 5. L'objet 9 présente au moins localement un nombre de couche supérieur au nombre de couche dans la dose. Les couches fonctionnelles 2 et 20 forment des plis 11 de sorte que localement l'objet comporte 7 ou 9 couches alors que la dose n'est formée que de 5 couches. Les extrémités de la couche fonctionnelle 2 apparaissent au niveau de la surface inférieure 12 de l'objet 9, tandis que les extrémités 10 de la couche fonctionnelle 20 apparaissent au niveau de la surface supérieur dudit objet. Les extrémités des couches 2 et 20 peuvent apparaître en surface de l'objet 9 ou se situer à proximité de la ladite surface. Les figures 5 et 6 illustrent l'influence de la position de la couche dans la dose sur la position des extrémités 10 dans l'objet. La position des extrémités 10 des couches 2 et 20 proche de la surface de l'objet 9 résulte de « l'écoulement fontaine » du front de matière. La formation des plis 11 est une conséquence de profil de vitesse de l'écoulement dans l'épaisseur : à proximité des parois du moule, la vitesse d'écoulement est nulle tandis qu'au niveau du plan médian, la vitesse d'écoulement est maximale. L'extrémité du pli 11 s'écoule donc à une vitesse supérieure à la vitesse d'écoulement de l'extrémité 10 de la couche 2.

La figure 7 représente une dose 1 comportant une couche fonctionnelle 4 emprisonnée entre les couches 3 et 4 de résine. Afin de ne pas compliquer l'exposé de l'invention, le nombre de couche représenté est volontairement réduit. Cependant, il est connu de l'homme du métier que l'association de résines thermoplastiques de nature différente nécessite généralement l'utilisation de couches adhésives qui lient les couches au niveau de l'interface. Comme représenté figure 7 et à titre d'exemple, la couche fonctionnelle 2 peut être considérée elle-même comme une structure multicouche composée des couches adhésives 2b et 2c et d'une couche fonctionnelle 2a.

Contrairement à l'enseignement de l'art antérieur pour fabriquer des objets multicouches par compression moulage, l'invention propose de comprimer une dose qui n'est pas symétrique autour de l'axe de compression. Il en résulte un objet ayant une répartition des couches sans axe de symétrie.

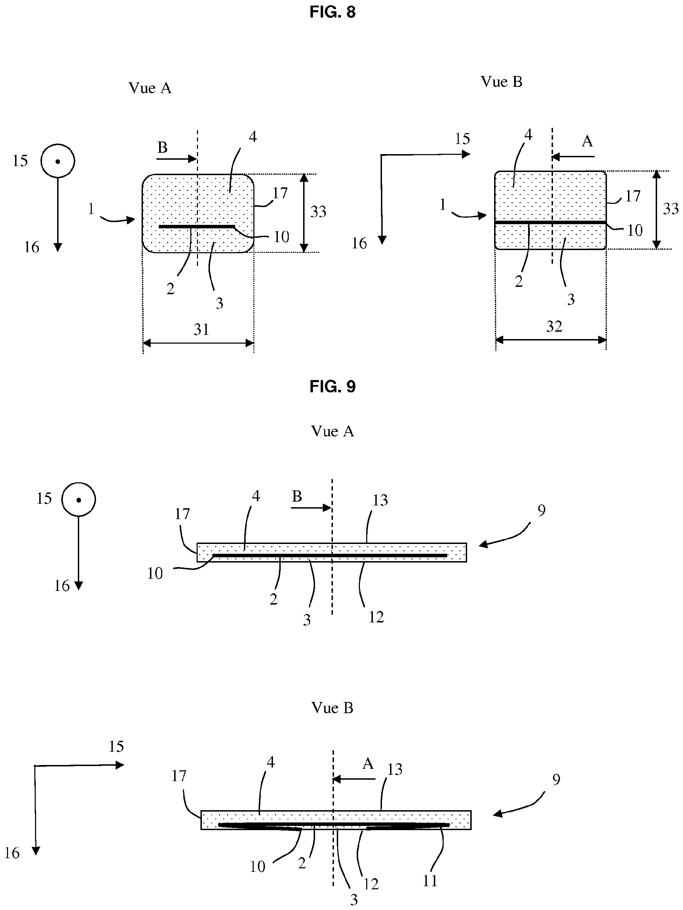

Les figures 8 et 9 décrivent la compression d'une dose qui n'est pas symétrique par rapport à l'axe de compression ainsi que l'objet multicouche obtenu.

La figure 8 illustre les vue en coupe A et B de la dose 1. La dose 1 est formée d'une couche fonctionnelle 2 emprisonnée entre deux couches 3 et 4 de résine. Cette dose 1 est obtenue préférentiellement par extrusion d'un jonc dont la section correspond à la vue A de la dose 1. Sur la vue A, on observe que les extrémités 10 de la couche fonctionnelle 2 sont absentes de la paroi latérale 17 de la dose. La direction d'extrusion de la dose 1 est indiquée par l'axe 15. La vue B représente une deuxième vue en coupe de la dose 1. Sur cette vue, les extrémités 10 de la couche fonctionnelle 2 se trouvent en surface de la paroi latérale 17 de la dose. La géométrie de la dose 1 est définie par une hauteur 33, une largeur 31 et une longueur 32. Pour la réalisation d'objets axisymétriques, il a été trouvé qu'un rapport de la largeur 31 sur la longueur 32 proche de 1 était avantageux. De même, il a été trouvé que le rapport de la hauteur 33 sur la largeur 31 de la dose était compris préférentiellement entre 0,5 et 2. Cependant pour des objets particuliers tels que des préformes, il est nécessaire d'avoir un rapport de la hauteur 33 sur la largeur 31 supérieur à 2. L'axe de compression de la dose 1 est parallèle à l'axe 16 indiqué figure 8.

La figure 9 montre l'objet 9 obtenu par compression dans un moule de la dose 1 représentée figure 8. La géométrie de l'objet 9 présente un axe de symétrie qui est aussi l'axe de compression de la dose. L'objet 9 se caractérise par le fait que sa structure multicouche ne présente pas d'axe de symétrie. La vue A illustre une première section de l'objet. La couche fonctionnelle 2 est emprisonnée entre les couches 3 et 4 formant respectivement les surfaces inférieure 12 et supérieure 13 de l'objet 9. Les extrémités 10 de la couche fonctionnelle 2 sont absentes de la paroi latérale 17 de l'objet ce qui indique que lesdites extrémités n'ont pas été entraînées par « l'écoulement Fontaine » situé au niveau du front de matière. La vue B présente une deuxième vue en coupe dudit objet 9. Selon cette vue, la couche fonctionnelle 2 forme un pli 11 au niveau de ses extrémités. Les extrémités 10 de la couche fonctionnelle 2 apparaissent au niveau de la surface inférieure 12. Les plis 11 forment la partie de la couche fonctionnelle 2 la plus éloignée de l'axe de symétrie de l'objet 9. L'analyse des écoulements pendant la compression montre que le pli 11 résulte de « l'écoulement fontaine » au niveau du front de matière ainsi que du profil de vitesse d'écoulement ; de dernier étant caractérisé par une vitesse nulle au niveau des parois du moule et une vitesse maximale au niveau du plan médian de compression. La couche fonctionnelle 2 est absente de la surface latérale 17 de l'objet. La couche fonctionnelle 2 forme une géométrie complexe sans axe de symétrie. Il est souvent souhaité que la couche fonctionnelle 2 soit présente jusqu'à la périphérie de l'objet. Il a été trouvé que malgré la répartition sans axe de symétrie de la couche fonctionnelle 2, ladite couche se propage radialement jusqu'à une distance proche de la paroi latérale 17 et sur tout le pourtour de l'objet. La distance entre l'extrémité radiale de la couche 2 et la paroi latérale 17 de l'objet varie faiblement. Il est observé que plus la longueur d'écoulement est grande, plus la variation de distance entre l'extrémité radiale de la couche 2 et la paroi latérale 17 est faible.

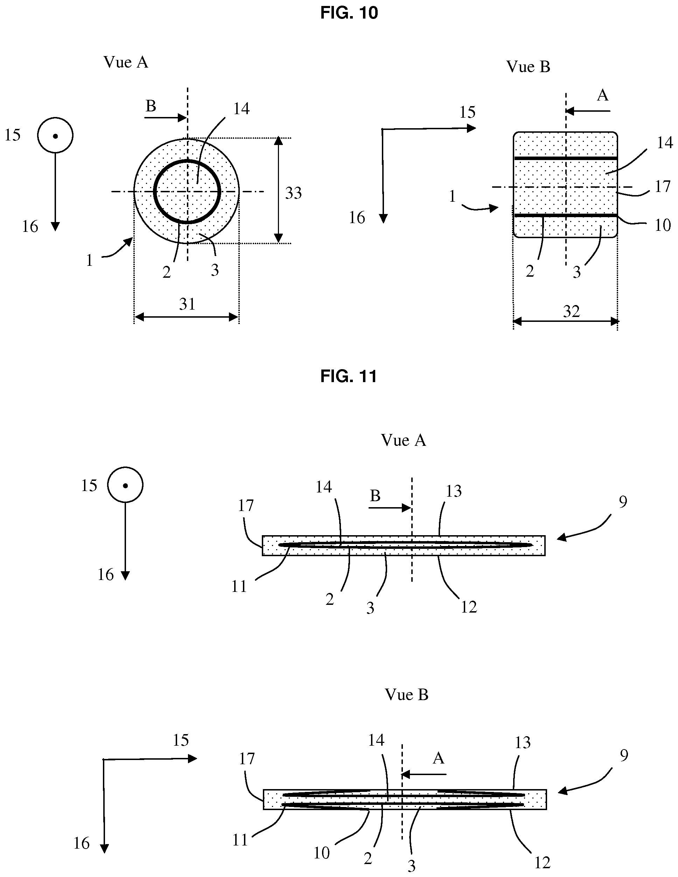

Les figures 10 et 11 décrivent un second exemple de compression d'une dose qui n'est pas symétrique par rapport à l'axe de compression ainsi que l'objet multicouche obtenu.

La figure 10 représente les vues A et B en coupe d'une dose 1 de géométrie cylindrique. La dose 1 est extrudée selon l'axe 15 et comprimée selon l'axe 16. Dans la dose 1, les couches sont disposées perpendiculairement à l'axe de compression. La dose 1 présente un axe de symétrie qui est l'axe d'extrusion 15 ; mais contrairement à l'enseignement du brevet US4904512, la dose 1 est comprimée perpendiculairement à l'axe de symétrie de ladite dose 1. La dose 1 est formée d'une couche fonctionnelle 2 emprisonnée entre les couches 3 et 14 formant respectivement les couches externe et centrale. La vue A illustre la section de la dose 1 perpendiculairement à l'axe d'extrusion 15. La section de la dose 1 observée sur vue A de la figure 10 correspond également à la section du jonc cylindrique qui est extrudé. La couche fonctionnelle 2 forme une enveloppe cylindrique centrée sur l'axe d'extrusion. La vue B de la figure 10 illustre la dose dans le sens de sa longueur 32, c'est-à-dire dans la direction d'extrusion 15. Les extrémités 10 de la couche 2 apparaissent au niveau de la surface latérale 17 de la dose 1. La surface 17 est formée lors de la coupe du jonc extrudé. Comme la dose 1 forme un cylindre de révolution, sa hauteur 33 est égale à sa largeur 31. Lors de la fabrication d'objets axisymétriques tels que présentés figure 11, il est observé que la vitesse de propagation de la couche fonctionnelle 2 n'est pas égale dans toutes les directions. Pour obtenir une répartition homogène de la couche fonctionnelle dans l'objet, il est nécessaire d'optimiser conjointement la géométrie de la dose et la position radiale de la couche fonctionnelle 2. Ainsi, plusieurs géométries de dose de volume identique permettent de conduire à l'objet multicouche ; cependant une dose dont le rapport de la longueur sur le diamètre est égal à 1 ne conduit pas forcément à une répartition optimale de la couche fonctionnelle 2 dans l'objet. Etonnamment, une dose dont le rapport de forme diffère de 1 conduit souvent à une distribution plus homogène de la couche fonctionnelle 2 dans l'objet. Par exemple, un rapport de la longueur sur le diamètre de la dose égal à 1,5 permet une répartition optimale de la couche fonctionnelle 2 dans l'objet illustré figure 11. La dose cylindrique présente de nombreux avantages pour la fabrication d'objets à haute vitesse de production. Comme nous l'exposerons plus loin dans la présentation de l'invention, la dose est transférée à grande vitesse dans la cavité d'un moule. Compte tenu de la vitesse d'exécution de ce transfert, il n'est pas toujours facile de contrôler précisément la position de la dose dans la cavité du moule. La dose cylindrique illustrée figure 10 présente un axe de symétrie, ce qui permet une rotation de la dose autour de cet axe sans que l'objet moulé soit modifié.

La figure 11 montre un objet 9 présentant un axe de symétrie et obtenu par compression dans la cavité d'un moule de la dose 1 illustrée figure 10. La vue A illustre une première coupe de l'objet. Les axes 15 et 16 permettent de situer l'objet par rapport au positionnement initial de la dose dans la cavité du moule. L'axe 16 indique la direction de compression, et l'axe 15 l'axe d'extrusion de la dose. La vue A montre comment s'est déformée la couche fonctionnelle 2 lors de la compression. La couche 2 forme un pli 11 situé proche de la surface latérale 17 formant l'extrémité de l'objet. La vue B représente l'objet 9 dans un plan de coupe parallèle à l'axe d'extrusion 15 et à l'axe de compression 16. Sur la vue B, il est observé que les extrémités 10 de la couche 2 apparaissent en surfaces inférieure et supérieure 12 et 13 dudit objet 9. La couche 2 forme plusieurs plis 11 qui se situent proche de la surface latérale 17 formant l'extrémité de l'objet 9. A partir de la dose 1 comprenant 5 couches, un objet 9 comprenant localement 9 couches est obtenu. Les vues A et B illustrent une répartition complexe de la couche fonctionnelle 2 issue de l'invention et qui ne figure pas dans l'enseignement de l'art antérieur.

Le procédé d'obtention des objets décrits figures 4, 6, 9 et 11 consiste en un procédé économique pour la réalisation d'objets multicouches à grande vitesse de production. Ce procédé comprend trois étapes principales consistant en l'extrusion de la dose multicouche, le transfert et le positionnement de ladite dose dans la cavité d'un moule afin que les couches soient perpendiculaires à la direction de compression, et enfin le moulage de l'objet multicouche par compression de la dose dans la cavité du moule.

Le procédé permet une bonne répartition de la couche fonctionnelle 2 dans l'objet même si la structure multicouche ne présente pas d'axe de symétrie.

Le procédé permet de réaliser d'objets sans axe de symétrie en adaptant la géométrie de la dose à celle de l'objet.

La première étape du procédé illustrée figures 12 et 13 consiste à extruder un jonc multicouche 21 et à le couper régulièrement pour former des doses. L'extrusion ininterrompue d'un jonc multicouche permet d'atteindre des cadences de production très élevées. Cependant, il peut être avantageux d'avoir une extrusion discontinue du jonc ou de seulement certaines couches. Une extrusion discontinue du jonc peut être utilisée pour faciliter la coupe du jonc. L'extrusion discontinue de certaines couches peut permettre la réalisation de doses plus complexes dans lesquelles certaines couches sont totalement emprisonnées même au niveau de leurs extrémités.

Il est possible également d'extruder une dose présentant un orifice.

La figure 12 montre l'extrusion d'un jonc cylindrique 21 sortant d'une tête de co-extrusion composée d'une filière 23 et d'un bloc de co-extrusion 22. Le bloc de co-extrusion 22 permet la formation de la structure multicouche, et la filière 23 définit la géométrie du jonc. La représentation des éléments 22 et 23 est très schématique et ne constitue pas une représentation exacte de ces éléments. Les têtes de co-extrusion pour faire des tubes, des profilés ou des plaques multicouches sont largement décrites dans l'art antérieur. La tête de co-extrusion est reliée à plusieurs extrudeuses qui alimentent à l'état fondu les résines formant les couches. Le jonc 21 est formé de l'empilement des couches 3, 2 et 14 de résines à l'état fondu. La température d'extrusion dépend de la nature des résines extrudées. En général cette température est comprise entre 100°C et 300 °C.

La figure 13 illustre la coupe 24 du jonc 21 pour former la dose 1. De nombreux dispositifs ont été décrits dans l'art antérieur pour couper des doses. Citons à titre d'exemple les dispositifs rotatifs dans lesquels le couteau peut être indépendant ou embarqué dans le dispositif de transfert de la dose. Certains couteaux consistent en un mouvement relatif de deux lames qui viennent couper la dose comme le ferait une paire de ciseau. D'autres dispositifs consistent en un obturateur qui dans son mouvement de fermeture coupe le jonc ou le tube 21.

La figure 14 représente le positionnement de la dose 1 dans la cavité 8 d'un dispositif de moulage comprenant un moule 5 formé au moins d'une matrice 6 et d'un poinçon 7 dont le déplacement relatif comprime la dose et forme l'objet. La dose 1 est positionnée dans la cavité 8 de sorte que la direction de compression 16 soit perpendiculaire aux couches. Le transfert de la dose dans le moule n'est pas représenté. Un dispositif de transfert peut être utilisé pour orienter la dose et la positionner dans la cavité. D'autres méthodes consistent à déposer directement la dose extrudée dans la cavité du moule. Le transfert de la dose dans la cavité du moule est une opération qui doit être faite rapidement afin d'éviter que la dose se refroidisse et présente des températures non homogène lors de la compression.

La figure 15 représente la vue en coupe de l'objet 9 obtenu par compression de la dose 1 dans le moule 5. Le moule 5 comprend généralement un circuit de refroidissement qui permet de solidifier la résine fondue et refroidir suffisamment l'objet pour permettre le démoulage. La température de régulation du moule est généralement comprise entre 0°C et 60 °C.

Un point important du procédé consiste à optimiser la géométrie de la dose en fonction de la géométrie de l'objet. Pour la réalisation d'un objet présentant un axe de symétrie tel qu'un bouchon, un gobelet, ou une capsule, le rapport de la longueur 32 sur la largeur 31 de la dose n'est pas forcément égal à 1. Pour une dose telle qu'illustrée sur la figure 10, ledit rapport est généralement différent de 1, par contre pour une dose telle qu'illustrée figure 8 ledit rapport est avantageusement proche de 1. La longueur 32 de la dose est définie par le débit d'extrusion et la fréquence de coupe ; la largeur 31 et la hauteur 33 de la dose sont définies par la géométrie de la filière 23. La position des couches dans la dose est optimisée pour obtenir une répartition de la couche fonctionnelle 2 souhaitée. Le rapport de la hauteur 33 sur la largeur 31 dépend surtout de la géométrie de l'objet et est généralement compris entre 0,2 et 5 et préférentiellement entre 0,5 et 2. Afin de faciliter la manipulation de la dose à très grande cadence de production, un rapport de la hauteur sur la largeur voisin de 1 est souvent utilisé.

Le procédé décrit dans l'invention permet de réaliser des objets avec ou sans orifice, mais ledit procédé est particulièrement avantageux pour réaliser à grande cadence des composants d'emballages multicouches qui ne comportent pas d'orifice. Ces composants d'emballage peuvent être des bouchons plastiques, des gobelets, ou encore des capsules. Les structures multicouches sont avantageuses car elles permettent d'améliorer les propriétés barrières desdits objets. Souvent il est nécessaire d'améliorer l'imperméabilité de ces objets à l'oxygène, au gaz carbonique ou encore aux arômes. L'invention permet d'apporter cette amélioration sans pénaliser la cadence de production et sans générer de déchets. Cependant, il est nécessaire pour certaines applications d'éviter le contact de la couche fonctionnelle 2 avec le produit emballé. Il convient donc d'éviter que les extrémités 10 de la couche 2 se trouvent présentes au niveau de la surface de l'objet en contact avec ledit produit.

Des méthodes pour contrôler la position des extrémités 10 de la couche fonctionnelle 2 dans l'objet sont présentées ci-dessous.

Une première méthode consiste à prévoir une position des couches à l'intérieur de la dose pour que les extrémités de la couche fonctionnelle 2 soient absentes de la surface de l'objet en contact avec le produit. La figure 9 montre un exemple où les extrémités 10 de la couche fonctionnelle 2 ne sont pas présentes au niveau de la surface supérieure 13 de l'objet en contact avec le produit emballé. L'emprisonnement des extrémités 10 de la couche fonctionnelle 2 à l'intérieur de la dose conduit à un objet ayant une couche 2 totalement absente de sa surface. L'emprisonnement des extrémités 10 dans la dose peut être fait par l'extrusion intermittente de la couche 2, ou lors de la coupe et du transfert de la dose.

Les figures 16 et 17 illustrent la réalisation d'un emballage 9 dans lequel la couche fonctionnelle 2 se situe proche de la surface supérieure 13 en contact avec le produit emballé, et dans lequel les extrémités 10 de la couche fonctionnelle 2 sont absentes de ladite surface supérieure 13. La figure 16 représente la dose 1 formée d'une couche fonctionnelle 2 emprisonnée entre les couches 3 et 4 de résine. Les extrémités 10 de la couche 2 apparaissent au niveau de la surface latérale 17 de ladite dose. La dose 1 est positionnée dans la cavité 8 du moule 5. La figure 17 représente l'objet obtenu par compression de la dose 1 illustrée figure 16. L'objet 9 comprend une surface supérieure 13 formant la surface interne d'un emballage ; ladite surface 13 étant en contact avec le produit emballé. La couche fonctionnelle 2 se situe proche de la surface supérieure 13 de l'objet 9 mais est absente de ladite surface 13. Les extrémités 10 de la couche fonctionnelle 2 sont présentes au niveau de la surface 12 formant la surface externe de l'emballage. L'absence des extrémités 10 de la surface interne de l'emballage dépend de la position de la couche 2 dans la dose ainsi que de la géométrie de l'objet.

Une autre méthode pour éviter le contact entre le produit emballé et les extrémités de la couche fonctionnelle 2 consiste à modifier le type de contact entre la résine fondue et la paroi du moule. Il est particulièrement intéressant d'avoir un contact de type glissant sur une partie de l'outillage ainsi qu'un contact de type collant sur la partie de l'outillage opposée. On peut par exemple utiliser un contact de type glissant entre le poinçon 7 et la résine fondue et un contact collant entre la matrice 6 et la résine fondue. En modifiant le contact entre la paroi du moule et la résine fondue, la position des extrémités de la couche fonctionnelle peut être modifiée. Le type de contact dépend des matériaux constituants la surface du moule et de l'état de surface dudit moule.

Lors de la production d'objet à grande cadence de production, il n'est pas toujours facile d'assurer un positionnement correct de la dose. En effet, il peut arriver que la dose tourne sur elle-même lors de son transfert ou positionnement dans la cavité du moule, ce qui engendre un positionnement inadéquat de la couche fonctionnelle 2 lors de la compression. La rotation de la dose peut entraîner par exemple un positionnement de la couche fonctionnelle 2 parallèle à l'axe de compression alors qu'un positionnement perpendiculaire est souhaité. Pour palier à cette difficulté, il est possible de jouer sur la géométrie de la dose en réduisant sa hauteur par rapport à sa longueur et sa largeur. Cependant, lors de la production d'objets multicouches à grande cadence de production la manipulation d'une dose de faible hauteur n'est pas toujours possible.

La figure 18 propose une dose particulièrement avantageuse parce que sa rotation n'a pas d'incidence sur l'objet multicouche obtenu. La vue A présente une section perpendiculaire à l'axe d'extrusion 15. La dose 1 est cylindrique de section carrée et comporte une couche 2 emprisonnée entre la couche de résine 3 formant la surface de la dose et la couche 14 formant la partie centrale. La vue B représente la dose dans un plan formé par l'axe d'extrusion 15 et l'axe de compression 16. La couche fonctionnelle 2 emprisonne la couche 14 et ses extrémités sont absentes de la surface de la dose. La largeur 31, la longueur 32 et la hauteur 33 sont égales ; la dose 1 formant ainsi une géométrie proche de celle d'un cube ou d'une sphère. La fabrication de la dose 1 nécessite une extrusion discontinue des couches 14 et 2.

La figure 19 représente l'objet obtenu par compression de la dose 1 dans un moule. La couche 2 est totalement absente de la surface de l'objet. L'objet obtenu de dépend pas de la position angulaire de la dose dans la cavité du moule.

Le centrage de la dose dans la cavité du moule est l'un des points clé de la production d'objets multicouche par compression moulage. En effet, si la dose n'est pas correctement centrée dans la cavité du moule, il s'ensuit un écoulement déséquilibré radialement et une mauvaise répartition de la couche fonctionnelle dans l'objet. Cependant, pour certains objets, il arrive que la barrière ne soit pas nécessaire dans tout l'objet. Pour un bouchon par exemple, il est fréquent que la barrière ne soit pas requise au niveau de la paroi latérale ; la présence de la couche barrière étant au moins requise au niveau du fond du bouchon. Il a été découvert qu'une dose adaptée permet de garantir la présence de la couche fonctionnelle au niveau du fond du bouchon, même si la dose est décentrée dans la cavité du moule.

Le rapport de viscosité entre les couches a une grande influence sur les écoulements lors de la compression et par conséquent sur la structure multicouche résultante dans l'objet. Des différences de viscosité entre les couches permettent de modifier la position des extrémités 10 de la couche fonctionnelle 2 dans l'objet. Des différences de viscosité entre les couches sont utilisées notamment pour emprisonner les extrémités 10 de la couche 2 dans l'objet afin que la couche 2 soit totalement absente de la surface dudit objet. Par exemple, il peut être avantageux d'avoir une couche fonctionnelle 2 plus visqueuse. Un deuxième exemple, consiste à avoir une couche de résine plus fluide située à proximité de la couche fonctionnelle et qui du fait de sa faible viscosité emprisonne en s'écoulant les extrémités de la couche fonctionnelle 2. Il est trouvé qu'un rapport de viscosité entre les couches supérieur à 5 facilite l'emprisonnement de l'extrémité 10 de la couche 2 dans l'objet. Dans l'esprit de l'invention, il est possible de modifier la viscosité de plus d'une couche pour emprisonner les extrémités de la couche 2 dans l'objet.

Il n'est pas toujours possible de jouer sur la viscosité relative entre les couches pour emprisonner totalement la couche 2. Des différences de viscosité trop grandes entre les couches peuvent générer des difficultés au niveau de l'extrusion, de la coupe, ou encore du transport et positionnement de la dose dans la cavité du moule. Il est donc proposé une méthode alternative consistant à emprisonner les extrémités 10 de la couche 2 dans la dose. L'emprisonnement total des extrémités 10 de la couche 2 dans la dose peut être fait de deux façon. Une première méthode consiste à une extrusion intermittente de la couche 2, alors que les autres couches sont extrudées sans interruption. Une deuxième méthode consiste à emprisonner les extrémités 10 de la couche 2 au moment de la coupe ou du transport de la dose.

Les figures 20 à 23 montrent l'effet d'un positionnement décentré d'une dose 1 dans la cavité 8 d'un moule 5 pour la réalisation de bouchons.

La figure 20 montre un premier exemple d'une dose 1 décentrée dans la cavité 8 d'un moule 5 composé d'une matrice 6 et d'un poinçon 7. La position de la couche 2 dans la dose est optimisée afin que suite à l'opération de moulage par compression ladite couche 2 se trouve au moins dans la partie formant le fond du bouchon. Il a été trouvé une position de la couche 2 dans la dose 1 qui permet un positionnement aléatoire de la dose 1 dans la cavité 8 dudit moule 5. La géométrie de la dose est optimisée en fonction de la géométrie de l'objet.

La figure 21 représente le bouchon 9 obtenu par compression de la dose 1 dont la position dans la cavité 8 du moule 5 est décentrée. La couche fonctionnelle 2 n'est que partiellement présente dans la paroi latérale 28 dudit bouchon 9 ; par contre la couche fonctionnelle 2 est répartie dans tout le fond 27 dudit bouchon.

La figure 22 illustre un deuxième exemple de dose 1 qui n'est pas centrée dans la cavité 8 d'un moule 5.

La figure 23 représente le bouchon 9 obtenue par moulage de la dose 1 présentée figure 22. La couche fonctionnelle 2 se trouve au moins dans la partie 27 formant le fond du bouchon 9. La paroi latérale 28 n'est que partiellement multicouche.

Les exemples précédents sont d'un grand intérêt pour la production de bouchons à grande vitesse de production. Un positionnement précis de la dose dans la cavité du moule n'est pas nécessaire ; la dose pouvant être positionnée aléatoirement dans ladite cavité. Cette partie de l'invention est particulièrement avantageuse car elle nécessite très peu de modification de l'équipement existant et elle permet la production de bouchons multicouches sans réduire la cadence de production par rapport à la production de bouchons monocouche.

Un dernier grand intérêt de l'invention est la possibilité de produire des objets multicouches qui n'ont pas d'axe de symétrie comme des bouchons ovales par exemple.

Cette partie de l'invention est illustrée par les figures 24 et 25 qui représentent la fabrication d'un bouchon de géométrie ovale avec une dose dont le rapport de la longueur sur la largeur est supérieur à 1.

La figure 24 illustre le positionnement d'une dose 1 dans la cavité 8 d'un moule 5. La vue A représente la section de la dose perpendiculairement à la direction d'extrusion 15. La vue B représente une deuxième section de la dose dans un plan contenant l'axe de la dose 15 et l'axe de compression 16. A partir des vues A et B, on observe que la longueur 32 de la dose est supérieure à la largeur 31 de ladite dose ; de même que la longueur 29 de la cavité est plus grande que la largeur 28 de ladite cavité. La géométrie de la dose est optimisée pour que la répartition de la couche fonctionnelle dans l'objet soit correcte. Dans certains cas, il est obtenu un rapport de la longueur 32 sur la largeur 31 de la dose sensiblement égal au rapport de la longueur 29 sur la largeur 28 de la cavité.

La figure 25 représente le bouchon 9 obtenu par compression de la dose 1 présentée figure 28. Les vues en coupe A et B montrent la répartition des couches selon deux plans perpendiculaires coupant de façon symétrique le bouchon 9. On observe que la couche fonctionnelle 2 est répartie correctement dans tout l'objet.

Les figures 26 à 30 montrent une variante de l'invention selon laquelle l'axe de compression de la dose 16 est oblique par rapport à l'axe d'extrusion 15.

La figure 26 représente une vue en coupe d'une dose coextrudée 1 comportant une couche fonctionnelle 2 emprisonnée entre deux couches 3 et 14 de résine. La dose 1 est positionnée dans la cavité 8 d'un dispositif de moulage comprenant un moule 5 formé au moins d'une matrice 6 et d'un poinçon 7 dont le mouvement relatif comprime la dose et forme l'objet. La dose 1 est positionnée dans le moule de sorte que l'axe de compression forme un angle avec l'axe d'extrusion de la dose. L'axe de compression n'est pas perpendiculaire à l'axe d'extrusion.

La figure 27 représente la vue en coupe de l'objet 9 obtenu par compression de la dose 1 dans le moule 5. Il est intéressant de noter la superposition de la couche 2 au centre de l'objet.

La compression d'une dose selon un axe oblique par rapport à l'axe d'extrusion est parfois difficile à réaliser du fait de l'instabilité de la dose dans une position oblique tel qu'illustré figure 26. Afin de palier à cette difficulté, une méthode consiste à déformer la dose avant de la positionner dans la cavité du moule. Une représentation schématique de cette méthode est illustrée sur les figures 28 à 30.

La figure 28 illustre la vue en coupe d'une dose multicouche 1 extrudée selon l'axe 15. La dose 1 comporte une couche fonctionnelle 2 emprisonnée entre 2 couches 3 et 14 de résine.

La figure 29 illustre la déformation de la dose 1 avant son positionnement dans le moule. Cette déformation peut être faite par compression, par cisaillement ou élongation de la dose entre des outils appropriés. La figure 29 illustre une déformation de la dose 1 par compression selon l'axe 16. La déformation est faite avantageusement lors de la coupe de la dose, ou lors du transfert de la dose dans la cavité du moule. La déformation de la dose telle qu'illustrée figure 29 facilite le positionnement de la dose dans la cavité du moule.

La figure 30 montre la dose 1 dans la cavité 8 du moule 5 avant l'étape de compression. La dose présente une grande stabilité, ce qui rend le procédé de compression plus robuste et répétitif.

Les résines utilisées dans le cadre de l'invention correspondent aux résines thermoplastiques couramment utilisés, et plus particulièrement celles utilisées dans le secteur de l'emballage. Parmi les résines fonctionnelles qui peuvent être utilisées, on peut citer les copolymères d'éthylène vinyl alcool (EVOH), les polyamides tels que le Nylon-MXD6, les copolymères acrylonitrile methyl acrylate (BAREX™), les polymères fluorés tels que le PVDF. Citons également quelques résines pouvant être utilisées pour les couches formant la structure de l'objet : polyéthylène (PE), polypropylène (PP), polystyrène (PS), polyamide (PA), polyester (PET). Cette liste n'est pas exhaustive.

La méthode de moulage par compression consiste à alimenter une dose multicouche de résines synthétiques à l'état fondu dans la cavité d'un moule ; à former l'objet par moulage par compression de ladite dose dans la cavité dudit moule ; à refroidir l'objet puis à le démouler.

L'invention permet de réaliser des objets avec une très fine couche fonctionnelle qui peut représenter moins de 5% du volume de l'objet.

La méthode de réalisation des objets multicouche exposée ci-dessous est particulièrement avantageuse pour réaliser des objets tels que des bouchons, des couvercles, des capsules, des pots. Cette méthode peut être utilisée également de façon avantageuse pour réaliser des préformes sous forme de galette ; ces galettes étant ensuite utilisées en thermoformage ou thermoformage soufflage pour former des objets multicouches.

## Revendications

1. Procédé de fabrication d'un objet multicouche en résine synthétique (9) par compression moulage d'une dose de résine fondue multicouche (1) comportant au moins une couche fonctionnelle (2,20), chaque couche de la dose se trouvant à l'état fondu lors de la compression; procédé consistant au moins à co-extruder des résines au travers d'une filière, à couper l'extrudat périodiquement afin d'obtenir une dose (1), puis à déposer la dose (1) à l'état fondu dans la cavité d'un moule ; procédé définissant de la sorte dans la dose une direction d'extrusion et une disposition de la couche fonctionnelle (2,20) parallèle à la direction d'extrusion; procédé **caractérisé par le fait que** l'on comprime la dose selon un axe de compression (16) qui coupe la direction d'extrusion et qui n'est pas un axe de symétrie de révolution de la dose, de manière à induire dans l'écoulement des couches une asymétrie par rapport à l'axe de compression (16) et obtenir un objet ayant une répartition des couches sans axe de symétrie de révolution.

2. Procédé selon la revendication 1 dans lequel on comprime ladite dose selon une direction qui coupe perpendiculairement la direction d'extrusion.

3. Procédé selon la revendication 2 dans lequel la dose se présente sous forme d'un parallélépipède rectangle.

4. Procédé selon la revendication 2 dans lequel on utilise une dose de section circulaire.

5. Procédé selon la revendication 4 dans lequel la dose se présente sous la forme d'un cylindre avec des couches disposées co-axialement selon la direction d'extrusion.

6. Procédé selon la revendication 5 dans lequel on utilise une dose avec une couche fonctionnelle formant une enveloppe autour de ladite direction d'extrusion.

7. Procédé selon la revendication 1 dans lequel on comprime ladite dose selon une direction qui coupe la direction d'extrusion selon un angle aigu ou obtus.

8. Procédé selon l'une quelconque des revendications précédentes dans lequel on dépose de manière décentrée la dose dans le moule.

9. Procédé selon l'une des revendications précédentes, dans lequel on utilise un dispositif de transfert pour orienter la dose et la positionner dans la cavité de sorte que la direction de compression soit perpendiculaire aux couches.

10. Procédé selon l'une des revendications précédentes, dans lequel la longueur de la dose est égale à la largeur de la dose ou n'est pas égale à la largeur de la dose.

11. Procédé selon l'une des revendications précédentes, dans lequel le rapport de viscosité entre la couche fonctionnelle (2,20) de la dose et au moins une autre couche de la dose est inférieur ou égal à 1/5 ou supérieur ou égal à 5.

12. Procédé selon l'une des revendications précédentes, dans lequel la dose comprend deux faces parallèles et comporte au moins une couche fonctionnelle disposée obliquement entre lesdites faces parallèles.

13. Objet multicouche en résine synthétique (9) obtenu par compression moulage d'une dose (1) selon un procédé défini dans l'une quelconque des revendications précédentes, ledit objet (9) étant défini par une dose qui n'est pas symétrique autour de l'axe de compression avant sa compression et par une répartition sans axe de symétrie de ses couches après sa compression.

14. Objet multicouche selon la revendication précédente **caractérisé par le fait qu'**au moins localement, le nombre de couches est supérieur au nombre de couches de la dose à partir de laquelle il est formé.

15. Objet multicouche selon la revendication 13 ou 14 **caractérisé par le fait que** son aspect externe est symétrique et qu'il est obtenu à partir d'une dose dont la longueur est égale à la largeur ou n'est pas égale à la largeur.

16. Objet multicouche selon l'une quelconque des revendications 13 à 15, ledit objet (9) comprenant une partie centrale et une partie fonctionnelle, **caractérisé par le fait qu'**il comprend une structure multicouche couvrant au moins ladite partie centrale et ladite partie fonctionnelle.

## Patentansprüche

1. Verfahren zur Herstellung eines mehrschichtigen Objekts aus Kunstharz (9) durch Formpressen einer Dosis (1) von mehrschichtigem geschmolzenen Harz, umfassend mindestens eine funktionelle Schicht (2, 20), wobei sich jede Schicht der Dosis im geschmolzenen Zustand beim Pressen befindet, wobei das Verfahren mindestens daraus besteht, Harze durch eine Düse zu co-extrudieren, das Extrudat periodisch zu schneiden, um eine Dosis (1) zu erhalten, dann die Dosis (1) im geschmolzenen Zustand in den Hohlraum einer Form abzuscheiden; wobei das Verfahren auf diese Weise in der Dosis eine Extrusionsrichtung und eine Anordnung der funktionellen Schicht (2, 20) parallel zur Extrusionsrichtung definiert; wobei das Verfahren **dadurch gekennzeichnet ist, dass** die Dosis in einer Pressachse (16) gepresst wird, welche die Extrusionsrichtung schneidet und welche keine Drehsymmetrieachse der Dosis ist, um im Strom der Schichten eine Asymmetrie in Bezug auf die Pressachse (16) zu induzieren, und ein Objekt zu erhalten, das eine Verteilung der Schichten ohne Drehsymmetrieachse aufweist.

2. Verfahren nach Anspruch 1, wobei die genannte Dosis in einer Richtung gepresst wird, welche die Extrusionsrichtung rechtwinklig schneidet.

3. Verfahren nach Anspruch 2, wobei die Dosis in der Form eines Quaders ist.

4. Verfahren nach Anspruch 2, wobei eine Dosis mit kreisförmigem Querschnitt verwendet wird.

5. Verfahren nach Anspruch 4, wobei die Dosis in der Form eines Zylinders ist, wobei Schichten co-axial in der Extrusionsrichtung angeordnet sind.

6. Verfahren nach Anspruch 5, wobei eine Dosis mit einer funktionellen Schicht verwendet wird, die eine Hülle um die Extrusionsrichtung bildet.

7. Verfahren nach Anspruch 1, wobei die Dosis in einer Richtung gepresst wird, welche die Extrusionsrichtung unter einem spitzen oder stumpfen Winkel schneidet.

8. Verfahren nach einem der vorhergehenden Ansprüche, wobei die Dosis in der Form auf dezentrierte Weise abgeschieden wird.

9. Verfahren nach einem der vorhergehenden Ansprüche, wobei eine Transfervorrichtung verwendet wird, um die Dosis zu orientieren und sie in dem Hohlraum derart zu positionieren, dass die Pressrichtung rechtwinklig zu den Schichten ist.

10. Verfahren nach einem der vorhergehenden Ansprüche, wobei die Länge der Dosis gleich ist der Breite der Dosis oder nicht gleich ist der Breite der Dosis.

11. Verfahren nach einem der vorhergehenden Ansprüche, wobei das Verhältnis der Viskosität zwischen der funktionellen Schicht (2, 20) der Dosis und mindestens einer anderen Schicht der Dosis kleiner oder gleich 1/5 oder größer oder gleich 5 ist.

12. Verfahren nach einem der vorhergehenden Ansprüche, wobei die Dosis zwei parallele Flächen umfasst und mindestens eine funktionelle Schicht umfasst, die schräg zwischen den genannten parallelen Flächen angeordnet ist.

13. Mehrschichtiges Objekt (9) aus Kunstharz, welches durch Pressformen einer Dosis (1) gemäß einem Verfahren erhalten wird, das in einem der vorhergehenden Ansprüche definiert ist, wobei das genannte Objekt (9) durch eine Dosis, die nicht symmetrisch um die Pressachse vor seinem Pressen ist, und durch eine Verteilung ohne Symmetrieachse seiner Schichten nach seinem Pressen definiert wird.

14. Mehrschichtiges Objekt nach dem vorhergehenden Anspruch, **dadurch gekennzeichnet, dass** mindestens lokal die Anzahl von Schichten größer ist als die Anzahl von Schichten der Dosis, aus der es gebildet ist.

15. Mehrschichtiges Objekt nach Anspruch 13 oder 14, **dadurch gekennzeichnet, dass** sein äußeres Aussehen symmetrisch ist, und dass es aus einer Dosis erhalten wird, deren Länge gleich der Breite ist oder nicht gleich der Breite ist.

16. Mehrschichtiges Objekt nach einem der Ansprüche 13 bis 15, wobei das Objekt (9) einen zentralen Abschnitt und einen funktionellen Abschnitt umfasst, **dadurch gekennzeichnet, dass** es eine mehrschichtige Struktur umfasst, die mindestens den genannten zentralen Abschnitt und den genannten funktionellen Abschnitt bedeckt.

## Claims

1. Method for manufacturing a multilayer object made of synthetic resin (9) by compression-moulding a dose of multilayer molten resin (1) comprising at least one functional layer (2, 20), each layer of the dose being in the molten state during compression; the method consisting at least in co-extruding resins through a die, in cutting the extrudate periodically in order to obtain a dose (1), then in depositing the dose (1) in the molten state in the cavity of a mould; the method in this way defining in the dose a direction of extrusion and a disposition of the functional layer (2, 20) parallel to the direction of extrusion; the method being **characterized by** the fact that the dose is compressed along a compression axis (16) which intersects the direction of extrusion and which is not an axis of symmetry of revolution of the dose, so as to induce, in the flow of the layers, an asymmetry with respect to the compression axis (16) and obtain an object that has a distribution of the layers without axis of symmetry of revolution.

2. Method according to Claim 1, wherein said dose is compressed in a direction which intersects perpendicularly the direction of extrusion.

3. Method according to Claim 2, wherein the dose takes the form of a rectangular parallelepiped.

4. Method according to Claim 2, wherein a dose of circular section is used.

5. Method according to Claim 4, wherein the dose takes the form of a cylinder with layers disposed coaxially in the direction of extrusion.

6. Method according to Claim 5, wherein a dose is used with a functional layer forming an envelope around said direction of extrusion.

7. Method according to Claim 1, wherein said dose is compressed in a direction which intersects the direction of extrusion by an acute or obtuse angle.

8. Method according to any one of the preceding claims, wherein the dose is deposited off-centre in the mould.

9. Method according to one of the preceding claims, wherein a transfer device is used to orient the dose and position it in the cavity in such a way that the direction of compression is at right angles to the layers.

10. Method according to one of the preceding claims, wherein the length of the dose is equal to the width of the dose or is not equal to the width of the dose.

11. Method according to one of the preceding claims, wherein the ratio of viscosity between the functional layer (2, 20) of the dose and at least one other layer of the dose is less than or equal to 1/5 or greater than or equal to 5.

12. Method according to one of the preceding claims, wherein the dose comprises two parallel faces and comprises at least one functional layer disposed obliquely between said parallel faces.

13. Multilayer object made of synthetic resin (9) obtained by compression-moulding of a dose (1) according to a method defined in any one of the preceding claims, said object (9) being defined by a dose which is not symmetrical about the axis of compression before its compression and by a distribution without axis of symmetry of its layers after its compression.

14. Multilayer object according to the preceding claim, **characterized by** the fact that, at least locally, the number of layers is greater than the number of layers of the dose from which it is formed.

15. Multilayer object according to Claim 13 or 14, **characterized by** the fact that its outer appearance is symmetrical and that it is obtained from a dose whose length is equal to the width or is not equal to the width.

16. Multilayer object according to any one of Claims 13 to 15, said object (9) comprising a central part and a functional part, **characterized by** the fact that it comprises a multilayer structure covering at least said central part and said functional part.
